# EUROPEAN PATENT SPECIFICATION

(11) **EP 0 819 576 B1**
(45) Date of publication and mention of the grant of the patent: **19.09.2001**
(21) Application number: 97112117.3
(22) Date of filing: 16.07.1997
(51) Int. Cl.: B60Q 1/076

(54) **A system for adjusting the attitude of the headlamps of a motor vehicle**
Einrichtung zur Einstellung der Neigung eines Kraftfahrzeugscheinwerfers
Dispositif pour ajuster l'inclinaison des phares d'un véhicule

(30) Priority: 18.07.1996 IT TO960625
(43) Date of publication of application: 21.01.1998
(73) Proprietor: MAGNETI MARELLI S.p.A., 20145 Milano (IT)
(72) Inventor: Nazha, Hassan, 27028 S. Martino Siccomario (Pavia) (IT)
(74) Representative: Quinterno, Giuseppe

(56) References cited:
- EP-A- 0 411 544
- EP-A- 0 535 472
- EP-A- 0 584 942
- PATENT ABSTRACTS OF JAPAN vol. 9, no. 60 (M-364) [1783] , 16 March 1985 & JP 59 195442 A (ICHIKO KOGYO KK), 1 November 1984,

## Description

The present invention relates to a system for adjusting the attitude of the headlamps of a motor vehicle of the kind defined in the preamble of claim 1.

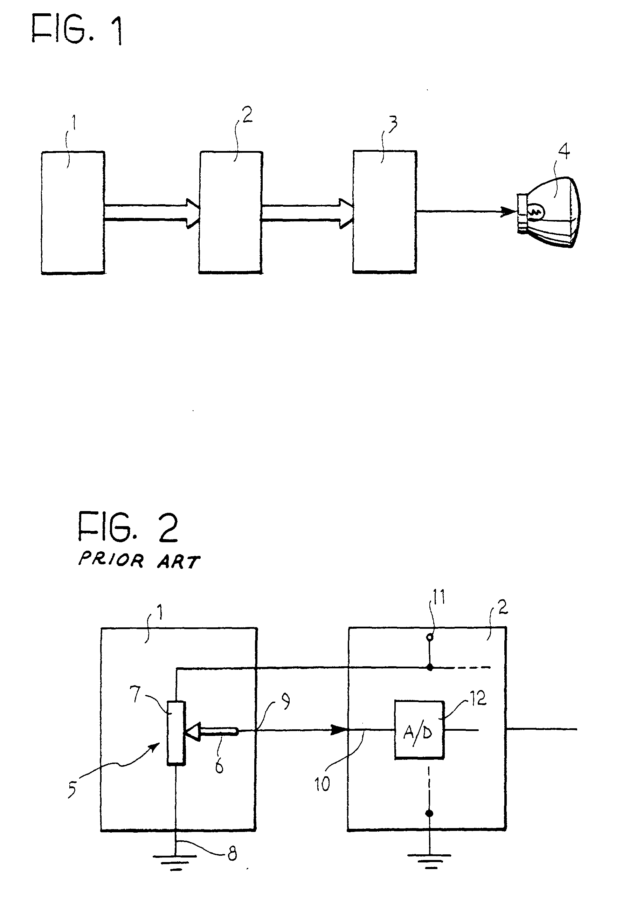

The structure of a system for adjusting the attitude of the headlamps of a motor vehicle is shown schematically in Figure 1 of the appended drawings. In this drawing, an attitude-control device is indicated 1 and can provide a variable analog voltage signal to an acquisition and driving circuit 2 including, for example, an analog/digital converter. The acquisition and driving device 2 is connected to an electrically-operated actuator 3 of known type which can modify the attitude or orientation of the headlamps 4 of the motor vehicle in dependence on the signals sent to it by the acquisition and driving device 2.

As shown in Figure 2, according to the prior art, the control device 1 may also include a potentiometer 5 including a slide 6 movable along a resistor 7 connected to a first terminal 8 which is kept at a reference potential, such as the earth potential of the motor-vehicle's electrical system. The slide 6 is connected to an output terminal 9 of the device 1 which in turn is connected to an input terminal 10 of the acquisition and driving circuit 2. The other terminal of the resistor 7 is connected to a supply terminal 11 of the acquisition and driving circuit 2. The terminal 11 is typically connected to the positive pole of the motor-vehicle battery.

As stated above, the acquisition and driving circuit typically comprises an analog/digital converter 12 the input of which is connected to the potentiometer slide 5.

In use, a voltage signal variable according to the position in which the slide 6 of the potentiometer 5 is set is applied to the input of the analog/digital converter 12 of the acquisition and driving circuit 2. The acquisition and driving circuit 2 correspondingly applies a different control signal to the actuator 3, bringing about a corresponding positioning or orientation of the headlamps 4 of the motor vehicle.

The solution of the prior art described above has some disadvantages.

In the first place, as can be seen in Figure 2, the control device 1 has to be connected to the acquisition and driving circuit 2 by means of at least two wires (and possibly by means of three wires if the potentiometer 5 is connected to earth through the acquisition and driving circuit).

Moreover, the voltage applied to the input of the analog/digital converter is affected by variations of the supply voltage (the battery voltage) applied to the terminal 11 of the acquisition and driving circuit. This may lead to undesired variations in the attitude of the motor-vehicle headlamps.

To prevent this second problem, the acquisition and driving circuit could be formed so as to acquire the supply voltage and to drive the actuator device 3, taking into account both the value of the voltage coming from the potentiometer 5 and the instantaneous value of the supply voltage. However, this solution is complicated and expensive.

A system as defined in the preamble of Claim 1 is disclosed in EP-A-0 411 544 A. The prior device shown in figure 1 of this document includes a control device (2) including a switch (4) which is coupled to the input of an acquisition and driving device (1) by a single connection conductor. The acquisition and driving device includes an input voltage divider comprising a first resistor (5a) connected to the voltage supply and a second resistor (5b) connected between the said connection conductor and the first resistor. With this arrangement, if the connection conductor is earthed due to an undesired contact with the vehicle body, the voltage signal applied to the input of the acquisition and driving device is exactly equal to the signal which in the absence of such an undesired contact to earth would be applied when the switch of the control device is disposed in one (P1) of its possible working positions. This indeed avoids that a condition of undesired contact to earth of the connection conductor may cause the headlamps to assume an undesired attitude. However such a condition is not readily recognisable.

EP-A-584 942 discloses another system for adjusting the attitude of headlamps, including a control device comprising a switch which controls the selective connection of resistors to an input of a comparator circuit. Said resistors are not connected to earth and are connected with each other in a so-called ladder arrangement. The supply voltage is applied to said resistor directly through the said switch.

An object of the present invention therefore is to provide a system for adjusting the attitude of the headlamps of a motor vehicle which prevents the problems of the systems of the prior art outlined above relatively simply and cheaply.

This and other objects are achieved, according to the invention, by an adjustment system as defined in claim 1.

Further characteristics and advantages of the invention will become clear from the following detailed description given purely by way of non-limiting example, with reference to the appended drawings, in which:
Figure 1, which has already been described, shows schematically the structure of a system for adjusting the attitude of the headlamps of a motor vehicle,
Figure 2, which has also been described already, shows a solution according to the prior art,
Figure 3 shows a solution according to the present invention, and
Figure 4 shows another system, not forming part of the invention, produced by modification of that of Figure 2.

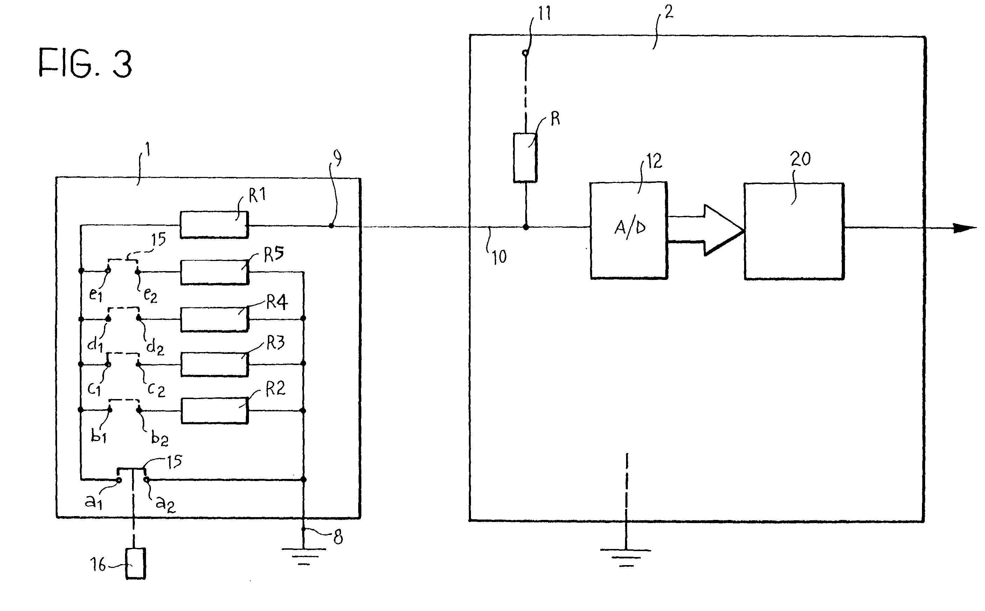

In the embodiment shown in Figure 3, in an adjustment system according to the invention, the control device 1 comprises a first resistor R1 having one terminal connected to the output terminal 9 and a plurality of further resistors R2 to R5 each having a respective conductor connected to the terminal 8 and hence to earth.

The control device 1 also includes five pairs of terminals a1-a2, b1-b2, ... e1-e2. The terminals a1, b1 ...e1 are connected to the other conductor of the resistor R1.

The terminal a2 is connected to earth while the terminals b2, c2, d2 and e2 are connected to the other conductor of each of the resistors R2, R3 ... R5.

The control device 1 also comprises a movable connection member 15 such as a conductor bridge which can adopt five different positions in each of which it interconnects the two terminals of a respective pair, a, b, c, ... e. In Figure 3, the bridge 15 has been shown by a solid line in the position in which it interconnects the terminals a1 and a2, the other possible positions of the bridge 15 being shown by broken lines.

The bridge 15 can be positioned in one of its various positions by means of a manually-operated member 16 such as a slide or knob.

The acquisition and driving circuit 2 comprises a resistor R interposed between the supply terminal 11 and the input terminal 10.

The output terminal 9 of the control device 1 is connected to the input terminal 10 of the acquisition and driving circuit 2.

In use, when the bridge 15 is disposed in the position shown by a solid line in Figure 3, the resistor R1 and the resistor R form a voltage divider such that a voltage having a first predetermined value is applied to the input of the analog/digital converter 12.

When the bridge 15 is placed in the position in which it connects the terminals b1 and b2, the resistors R1 and R2 are connected in series. These resistors in series form, with the resistor R, a voltage divider having a different division ratio from the previous one and the value of the voltage applied to the input of the analog/digital converter 12 correspondingly changes.

A suitable selection of the resistance values of the resistors R1 to R5 enables a different voltage value to be provided at the input of the analog/digital converter 12 for each different operative position of the bridge 15.

It is also possible, by the selection of the resistance values, to arrange that, with variations of the supply voltage applied to the terminal 11 of the circuit 2, the voltage values applied to the input of the converter 12 for each position of the bridge 15 nevertheless remain within respective predetermined ranges. The control device 1 thus enables five different voltage values corresponding to five different attitudes of the headlamps of the motor vehicle to be applied to the acquisition and driving circuit 2, these voltage values being "recognizable" by the circuit 2, even when there are variations in the supply voltage applied to the terminal 11 of the circuit. The further circuitry 20 included in the acquisition and driving circuit 2 can thus discriminate easily which attitude of the headlamps is to be implemented.

As already stated, the embodiment described above enables the headlamps to be arranged in five possible different attitudes.

Clearly, however, the device can easily be modified to implement a smaller or larger number of headlamp attitudes.

Moreover, it is clear to experts in the art that the bridge 15 and the associated pairs of contacts a-e may be replaced by a single movable contact connected to the resistor R1 and selectively connectible to the earth terminal 8 or to one of the resistors R2-R5.

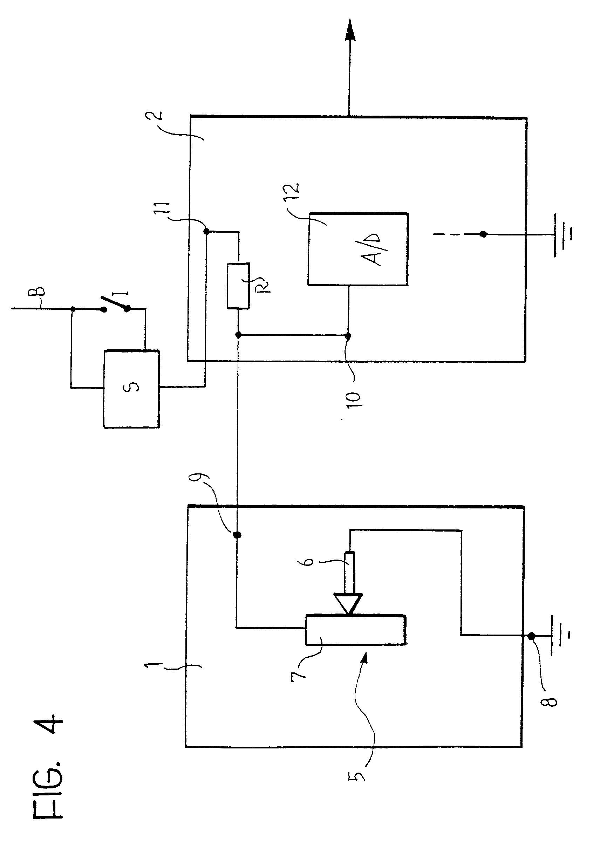

As shown in the system of Figure 4 which does not form part of the invention, the resistors R1-R5 may be replaced by a potentiometer the slide 6 of which is connected to earth.

In general, the supply terminal 11 of the acquisition and driving circuit may not be connected permanently to the motor-vehicle battery but, rather, may be supplied by the battery B by means of a stabilized supply circuit S (Figure 4) which can supply a constant voltage V_{c} to the terminal 11 and can be activated by the ignition switch I of the vehicle, typically operated by a key. The voltage V_{c} is lower than the voltage typically supplied to the battery B by the vehicle's generator (not shown) and may be, for example, between 5 and 8V.

As can be appreciated, the system according to the invention reduces the number of connections between the control device 1 and the acquisition and driving circuit 2 and also avoids problems which arose with the solutions of the prior art as a result of fluctuations in the supply voltage.

Naturally, the principle of the invention remaining the same, the forms of embodiment and details of construction may be varied widely with respect to those described and illustrated by way of non-limiting example, without thereby departing from the scope of the present invention as defined in the annexed Claims.

## Claims

1. A system for adjusting the attitude of the headlamps (4) of a motor-vehicle, comprising
a control device (1) having an earth terminal (8) and an output terminal (9) between which there are interposed resistive means (R2-R5) the resistance of which is variable in dependence upon the position of an associated manual control member (16) for providing, by connection to voltage supply means (11; S), a correspondingly variable voltage signal; and
acquisition and driving means (2) having an input (10) connected by a single electrical connection conductor to the output terminal (9) of the control device (1) for acquiring said variable voltage signal and correspondingly driving actuator means (3) adapted to modify the attitude of the headlamps (4);
said resistive means including at least one resistor (R2-R5) having one end connected to the earth terminal (8); the control device (1) comprising connection means (15) operable by said control member (16) to selectively couple said output terminal (9) to the earth terminal (8) or to the other end of said at least one resistor (R2-R5);
the acquisition and driving means (2) including a first resistor (R) having one end coupled to the voltage supply means (11; S) and the other end coupled to said connection means (15) of the control device (1) through a second resistor (R1) and said single electrical connection conductor;
**characterised in that**
said second resistor (R1) is comprised in said control device (1) and is connected between the output terminal (9) thereof and the said connection means (15), and said single electrical connection conductor extends between said second resistor (R1) and said other end of the first resistor (R).

2. A system according to Claim 1, **characterised in that** the resistive means comprise a plurality of further resistors (R2-R5) each having one end connected to the earth terminal (8), and the connection means (15) are adapted to connect the said second resistor (R1) selectively to the other end of one of said further resistors (R2-R5).

3. A system according to Claim 1 or 2, **characterised in that** the said first resistor (R) is coupled to a supply terminal which is connected to a stabilised direct voltage supply (S).

## Patentansprüche

1. System, mit dem die Einstellung der Scheinwerfer (4) eines Kraftfahrzeugs eingestellt werden kann, wobei das System enthält:
eine Steuerstufe (1), die einen Masseanschluss (8) sowie einen Ausgang (9) besitzt, zwischen denen eine Widerstandseinrichtung (R2-R5) angeordnet ist, deren Widerstandswert in Abhängigkeit von der Stellung eines zugeordneten Handsteuerelements (16) veränderbar ist, um durch eine Verbindung mit einer Spannungsversorgungseinrichtung (11; S) ein entsprechend veränderbares Spannungssignal zu liefern; sowie
eine Erfassungs/Ansteuer-Stufe (2), die einen Eingang (10) besitzt, der über eine einzige elektrische Leitungsader mit dem Ausgang (9) der Steuerstufe (1) verbunden ist, um das veränderbare Spannungssignal zu erfassen und ein Stellglied (3) entsprechend anzusteuern, das so aufgebaut ist, um die Einstellung der Scheinwerfer (4) zu verändern;
wobei die Widerstandseinrichtung zumindest einen Widerstand (R2-R5) aufweist, von dem ein Ende mit dem Masseanschluss (8) verbunden ist; wobei die Steuerstufe (1) eine Verbindungseinrichtung (15) besitzt, die mit dem Steuerelement (16) betätigt werden kann, um wahlweise den Ausgang (9) mit dem Masseanschluss (8) oder mit dem anderen Ende des zumindest einen Widerstands (R2-R5) zu verbinden;
wobei die Erfassungs/Ansteuer-Stufe (2) einen ersten Widerstand (R) aufweist, der ein Ende besitzt, das mit der Versorgungsspannungseinrichtung (11; S) verbunden ist, wobei das andere Ende über einen zweiten Widerstand (R1) und die einzige elektrische Leitungsader an der Verbindungseinrichtung (15) der Steuerstufe (1) liegt;
**dadurch gekennzeichnet, dass**
der zweite Widerstand (R1) in der Steuerstufe (1) enthalten ist und zwischen deren Ausgang (9) und der Verbindungseinrichtung (15) liegt, wobei die einzige elektrische Leitungsader zwischen dem zweiten Widerstand (R1) und dem anderen Ende des ersten Widerstands (R) verläuft.

2. System gemäß Anspruch 1, **dadurch gekennzeichnet, dass** die Widerstandseinrichtung eine Vielzahl von weiteren Widerständen (R2-R5) enthält, von denen jeder mit einem Ende am Masseanschluss (8) liegt, wobei die Verbindungseinrichtung (15) so aufgebaut ist, um den zweiten Widerstand (R1) wahlweise mit dem anderen Ende von einem der weiteren Widerstände (R2-R5) zu verbinden.

3. System gemäß Anspruch 1 oder 2, **dadurch gekennzeichnet, dass** der erste Widerstand (R) mit einem Versorgungsanschluss verbunden ist, der an einer stabilisierten Gleichspannungsversorgung (S) liegt.

## Revendications

1. Système de réglage de l'orientation des phares (4) d'un véhicule à moteur, comprenant:
un dispositif de commande (1), comportant une borne de masse (8) et une borne de sortie (9), entre lesquelles sont intercalés des moyens résistifs (R2 à R5), dont la résistance est variable en fonction de la position d'un élément de commande manuelle (16) associé, pour fournir, par connexion à des moyens d'alimentation en tension (11 ; S) un signal de tension, variable en conséquence; et
des moyens d'acquisition et d'attaque (2), comportant une entrée (10), reliée par un seul conducteur de raccordement électrique, à la borne de sortie (9) du dispositif de commande (1), afin d'obtenir ledit signal de tension variable, et des moyens formant actionneur d'attaque (3), propres à modifier en conséquence l'orientation des phares (4) ;
lesdits moyens résistifs comprenant au moins une résistance (R2 à R5), dont une extrémité est reliée à la borne de masse (8), le dispositif de commande (1) comprenant des moyens de connexion (15), que peut commander ledit élément de commande (16) pour relier, sélectivement, ladite borne de sortie (9) à la borne de masse (8) ou à l'autre extrémité de ladite au moins une résistance (R2 à R5);
les moyens d'acquisition et d'attaque (2) comprenant une première résistance (R) dont une extrémité est reliée aux moyens d'alimentation en tension (11 ; S), et dont l'autre extrémité est reliée auxdits moyens de connexion (15) du dispositif de commande (1), par l'intermédiaire d'une deuxième résistance (R1) et dudit unique conducteur de raccordement électrique;
**caractérisé en ce que**
ladite deuxième résistance (R1) est située dans ledit dispositif de commande (1) et en ce qu'elle est montée entre la borne de sortie (9) de celui-ci et lesdits moyens de connexion (15), et en ce que ledit unique connecteur de raccordement électrique s'étend entre ladite deuxième résistance (R1) et ladite autre extrémité de la première résistance (R).

2. Système selon la revendication 1, **caractérisé en ce que** les moyens résistifs comprennent une pluralité de résistances (R2 à R5) supplémentaires, qui ont chacune une extrémité reliée à la borne de masse (8), tandis que les moyens de connexion (15) sont propres à relier ladite deuxième résistance (R1), de manière sélective, à l'autre extrémité de l'une desdites résistances (R2 à R5) supplémentaires.

3. Système selon la revendication 1 ou 2, **caractérisé en ce que** ladite première résistance (R) est reliée à une borne d'alimentation, qui est raccordée à une source de tension continue stabilisée (S).
